# EUROPEAN PATENT APPLICATION

(11) **EP 3 226 046 A1**
(43) Date of publication of application: **04.10.2017**
(21) Application number: 17020099.2
(22) Date of filing: 14.03.2017
(51) Int. Cl.: G02B 6/42

(54) **CONNECTION STRUCTURE OF OPTICAL FIBER ARRAY AND OPTICAL MODULE**

(30) Priority: 29.03.2016 JP 2016066437
(71) Applicant: Hosiden Corporation, Yao-shi, Osaka 581-0071 (JP)
(72) Inventor: Sasada, Kosuke, YAO-SHI, Osaka, 581-0071 (JP); Nagata, Takayuki, YAO-SHI, Osaka, 581-0071 (JP)
(74) Representative: Beresford Crump LLP

(57) **Abstract**

The invention provides a connection structure of an optical fiber array and an optical module in which a plurality of optical fibers is readily connectable to a plurality of converters of the optical module. The connection structure S includes an optical module M and an optical fiber array 100. The optical module M includes a base 200 and converters 300. The base 200 has a first face 201 with a recess 210, and the recess 210 opens to at least the Y-direction side. The converters 300 are optical-electrical converters or electrical-optical converters that are arranged at the base 200 in parallel with each other along the X-X' direction. The optical fiber array 100 includes optical fibers 110, each having a first end portion 111, and a plastic part 120. The first end portions 111 of the optical fibers 110 are arranged in parallel with each other along the X-X' direction and coated with the plastic part 120. The first end portions 111 as coated with the plastic part 120 are fixedly positioned in the recess 210 and optically connected to respective ones of the converters 300.

## Description

### Technical Field

The invention relates to a connection structure of an optical fiber array and an optical module.

### Background Art

Some conventional connection structures are described in Japanese Unexamined Patent Application Publication Nos. 2006-3818 and 2006-259590. The connection structures each include light guides and an optical module. The optical module includes a base, a mirror, and converters. An end portion of the base is provided with a recess. End portions of the light guides are fixedly received in the recess. The converters are optical-electrical converters or electrical-optical converters. The converters are mounted near the recess of the base such as to face the mirror located at the back of the recess. The mirror reflects optical signals emitted from the end portions of the light guides onto the converters and/or from the converters to the end portions of the light guides.

### Summary of Invention

### Technical Problem

There is a recent demand to facilitate optical connection between an optical fiber array and converters of an optical module. In a typical method for such connection, the plastic part coating end portions of optical fibers is stripped so as to expose the end portions, and then the end portions are optically connected to the corresponding converters. Such stripping is very inconvenient to strip the plastic part coating end portions of optical fibers and expose the end portions. It is also very inconvenient to optically connect the end portions of the optical fibers one by one to the converters.

The invention is devised in view of the above circumstances and provides a connection structure of an optical fiber array and an optical module in which a plurality of optical fibers is readily connectable to a plurality of converters of the optical module. Solution to Problem

A connection structure of one aspect of the invention includes an optical module and an optical fiber array. The optical module includes a base and a plurality of converters. The base has a first face with a recess. The recess extends in a first direction and a second direction and opens to at least one side in the first direction. The second direction is orthogonal to the first direction. The converters are each an optical-electrical converter or an electrical-optical converter, and they are arranged at the base in parallel with each other along the second direction. The optical fiber array includes a plastic part and a plurality of optical fibers. The optical fibers each have a first end portion. The first end portions of the optical fibers are arranged in parallel with each other along the second direction and coated with the plastic part. The first end portions as coated with the plastic part are fixedly positioned in the recess of the base and optically connected to the corresponding converters.

In the connection structure of this aspect, the plurality of optical fibers are readily connectable to the plurality of converters. Particularly, the first end portions of the optical fibers as coated with the plastic part are optically connected to the converters at once.

The recess may open to one side in a third direction. The third direction may preferably be orthogonal to the first and second directions. The base may be a Si substrate or an SOI substrate. In the connection structure of this aspect, as the base is a Si substrate or an SOI substrate, the recess may be formed in the base accurately and readily by etching or any other suitable process.

The base may or may not further include a groove. If provided, the groove may preferably be located on the other side side in the first direction relative to the recess in the first face of the base. The groove may preferably extend in the second direction such as to communicate with the recess and open to the one side in the third direction.

The groove may include a wall on the other side in the first direction. If the groove is omitted, the recess may have a wall on the other side in the first direction. In these cases, the converters may preferably be located on the one side in the third direction relative to the wall.

The optical module may further include a mirror on the wall. The mirror may preferably be inclined or curved such that the first end portions of the optical fibers are optically connected to the corresponding converters via the mirror.

The recess may have a bottom. The mirror may also extend on a portion on the other side in the first direction of the bottom of the recess.

### Brief Description of the Drawings

Fig. 1A is a schematic plan view of a connection structure of an optical fiber array and an optical module in accordance with an embodiment of the invention.
Fig. 1B is a sectional side view of the connection structure, taken along line 1B-1B in Fig. 1A.
Fig. 2A is a schematic plan view of a base, a mirror, and electrodes of the optical module of the connection structure.
Fig. 2B is a schematic side view of the base, the mirror, and the electrodes of the optical module of the connection structure.

In the brief description of the drawings above and the description of embodiments which follows, relative spatial terms such as "upper", "lower", "top", "bottom", "left", "right", "front", "rear", etc., are used for the convenience of the skilled reader and refer to the orientation of the connection structure and its constituent parts as depicted in the drawings. No limitation is intended by use of these terms, either in use of the invention, during its manufacture, shipment, custody, or sale, or during assembly of its constituent parts or when incorporated into or combined with other apparatus.

### Description of an Embodiment

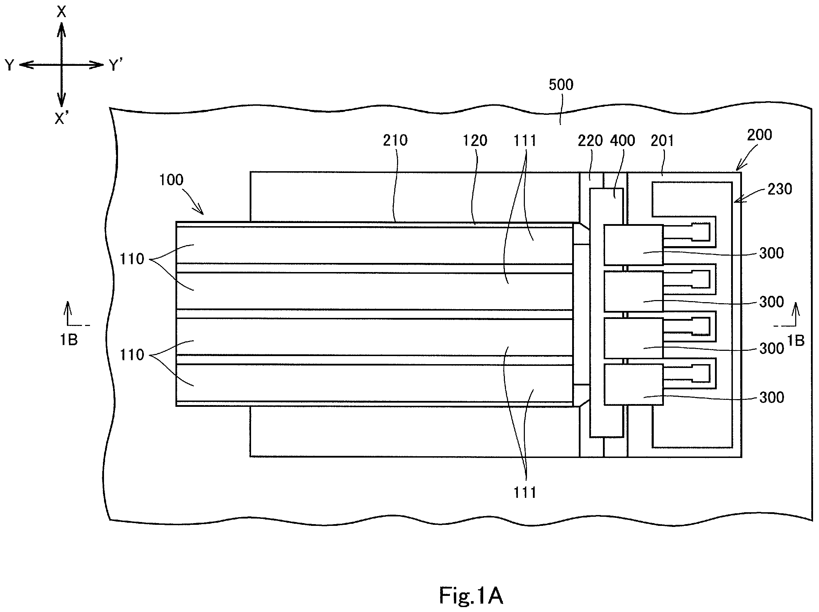

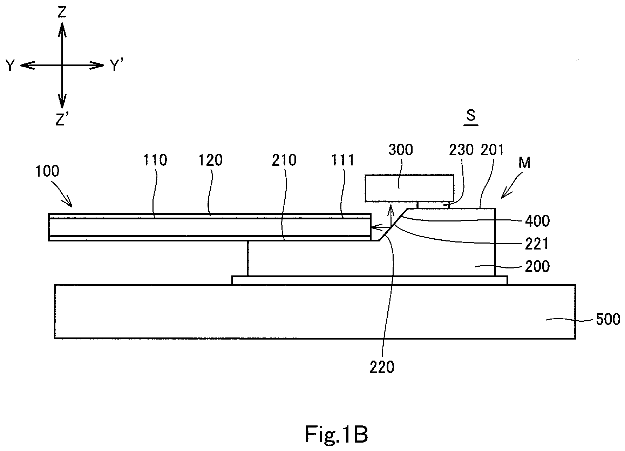

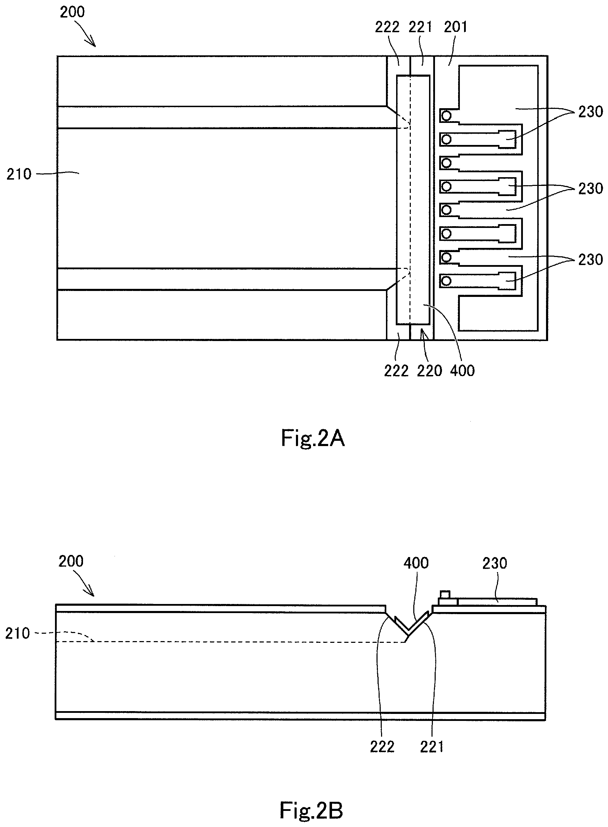

A connection structure S of an embodiment of the invention will be described below with reference to Fig. 1A to Fig. 2B. The connection structure S includes a first optical module M, which may be referred to simply as an optical module M, and an optical fiber array 100. Fig. 1A to Fig. 2B illustrate only the first end portion of the optical fiber array 100. The Y-Y' direction shown in Fig. 1A and Fig. 1B corresponds to the first direction in the claims. The Y-Y' direction includes the Y direction, which corresponds to one side in the first direction, and the Y' direction, which corresponds to the other side in the first direction. The X-X' direction shown in Fig. 1B corresponds to the second direction in the claims. The X-X' direction also corresponds to a direction in which a plurality of optical fibers 110 (to be described) of the optical fiber array 100 are arrayed. The X-X' direction is orthogonal to the Y-Y' direction. The Z-Z' direction shown in Fig. 1A and Fig. 1B corresponds to the third direction in the claims and also corresponds to a thickness direction of the optical fiber array 100. The Z-Z' direction is orthogonal to the Y-Y' direction and the X-X' direction. The Z-Z' direction includes the Z direction, which corresponds to one side in the third direction, and the Z' direction, which corresponds to the other side in the third direction.

The optical fiber array 100 (optical fiber ribbon) includes the aforementioned optical fibers 110 and a plastic part 120. The optical fiber array 100 may include, for example, 2, 3, 4, 8, 12, 16, 24, 32, 40, 48, or 64 optical fibers 110. Fig. 1A to Fig. 1B shows four optical fibers 110. The optical fibers 110 each have an optical path (core) and a clad coating the optical path. The optical fibers 110 each have a first end portion 111. At least the first end portions 111 of the optical fibers 110 may preferably extend in the Y-YX' direction and may be arranged in parallel with each other along the X-X' direction. The entire optical fibers 110 (including the first end portions 111) may be arranged in parallel with each other along the X-X' direction. The plastic part 120 is made of a photo-curable resin or other polymer. The plastic part 120 coats at least the first end portions 111 collectively. The plastic part 120 may coat the entire optical fibers 110 (including the first end portions 111) collectively. In this case, the end faces of the first end portions 111 are exposed out of the plastic part 120, so that the optical paths (cores) of the first end portions 111 are exposed out of the plastic part 120.

The optical module M includes a base 200. The base 200 may be a metal plate, a plastic plate, a silicon (Si) substrate, or a silicon-on-insulator (SOI) substrate. The base 200 includes a first face 201 with a recess 210. The first face 201 is the Z-direction side face of the base 200. The recess 210 is provided in the first face 201 of the base 200. The recess 210 is a rectangular recess extending in the Y-Y' and X-X' directions. The recess 210 has a bottom (a face on the Z'-direction side), which may be flat. The recess 210 may open in the Y direction. The recess 210 may open in the Y and Z directions as shown in Fig. 1A to Fig. 2B. In this embodiment, the first face 201 includes edges on the X- and X'-direction sides (hereinafter referred to as first and second edges, respectively) of the recess 210.

The recess 210 has an X-X' direction dimension corresponding to the X-X' direction dimension of the optical fiber array 100. For example, the X-X' direction dimension of the recess 210 is substantially the same as or slightly larger than that of the optical fiber array 100. Such dimensional relationship allows the first end portions 111 of the optical fibers 110, as coated with the plastic part 120, to be fixedly positioned inside the recess 210. In other words, the first end portion of the optical fiber array 100 may be fixedly positioned inside the recess 210. For example, the first end portion of the optical fiber array 100 may be fixedly positioned inside the recess 210 with a known adhesion means, such as an adhesive agent or a double-sided adhesive tape. Alternatively, the first end portion of the optical fiber array 100 may fit in the recess 210.

The recess 210 further has walls on the X- and X'-direction sides. The X-direction-side wall of the recess 210 may extend from the first edge of the first face 201 to the bottom of the recess 210 at an inclination or curve in the X' and Z' directions or perpendicularly to the bottom of the recess 210. The X'-direction-side wall of the recess 210 may extend from the second edge of the first face 201 to the bottom of the recess 210 at an inclination or curve in the X and Z' directions or perpendicularly to the bottom of the recess 210.

The recess 210 dimension may have any Z-Z' direction dimension or may correspond to the Z-Z' direction dimension of the optical fiber array 100. For example, the Z-Z' direction dimension of the recess 210 may be substantially the same as or slightly larger than that of the optical fiber array 100.

If the base 200 is a Si substrate or an SOI substrate, the recess 210 may be formed in the first face 201 of the base 200 in one of the following manners. A resist is applied onto the first face 201 of the base 200, and the resist is patterned corresponding to the contour of the recess 210. Then, the base 200 is etched at the portion exposed from the pattern. After that, the resist is removed. The recess 210 is thus formed in the first face 201 of the base 200. Alternatively, the recess 210 may be formed by subjecting the first face 201 of the base 200 to laser beam machining or other machining.

The base 200 may further include a groove 220 on the Y'-direction side of the recess 210 in the first face 201 of the base 200. The groove 220 communicates with the recess 210 and extends in the X-X' direction. The groove 220 has an X-X' direction dimension which may be larger than the X-X' direction dimension of the recess 210 as shown in Fig. 1A to Fig. 2B, or alternatively smaller than, or the same as that of the recess 210. The groove 220 has a Z-Z' direction dimension which may be larger than, smaller than, or the same as the Z-Z' direction dimension of the recess 210. In an embodiment where the base 200 includes a groove 220, the first face 201 of the base 200 has edges on the Y'- and Y-direction sides (hereinafter referred to as third and fourth edges, respectively) of the groove 220. In an embodiment where the base 200 has no groove 220, the first face 201 has an edge on the Y'-direction side (hereinafter referred to as a fifth edge) of the recess 210.

The groove 220 may have a cross-section generally of V-shape, as in the embodiment of Fig. 1A to Fig. 2B, or square U-shape. The groove 220 may be formed, for example, by a dicing process using a blade. Alternatively, the groove 220 may be formed in the same manner as the recess 210. The groove 220 may preferably have at least a first wall 221 on the Y'-direction side, which may be referred to simply as a wall 221 and corresponds to a first wall of a groove in the claims. The wall 221 may preferably extend from the third edge of the first face 201 to the bottom of the groove 220 at an inclination in the Y and Z' directions. The groove 220 may further have a pair of second walls 222 on the Y-direction side, which may be referred to simply as walls 222 and correspond to a pair of second walls of the groove in the claims. The recess 210 is located between the walls 222. The walls 222 may extend from the fourth edge of the first face 201 to the bottom of the groove 220 at an inclination in the Y' and Z' directions or perpendicularly to the bottom of the recess 210. In an embodiment where the base 200 has no groove 220, the recess 210 may have a wall on the Y'-direction side, which may extend from the fifth edge of the first face 201 to the bottom of the recess 210 at an inclination in the Y and Z' directions.

The optical module M may further include a plurality of first converters 300, which may be referred to simply as converters 300. In an embodiment where the base 200 includes a groove 220, the converters 300 may preferably be arranged on the first face 201 of the base 200, in parallel with each other along the X-X' direction, located on the Y'-direction side relative to the groove 220, and located on the Z-direction side relative to the wall 221 such as to at least face the wall 221. In this case, it is preferable that electrodes 230 to be connected to the respective converters 300 be provided on the first face 201 of the base 200 such as to be located on the Y'-direction side relative to the groove 220. In an embodiment where the base 200 has no groove 220 and the Y'-direction side wall of the recess 210 is inclined as described above, the converters 300 may preferably be arranged on the first face 201 of the base 200, in parallel with each other along the X-X' direction, located on the Y'-direction side relative to the recess 210, and located on the Z-direction side relative to the Y'-direction side wall of the recess 210 such as to at least face this wall. In this case, it is preferable that electrodes 230 to be connected to the respective converters 300 be provided on the first face 201 of the base 200 such as to be located on the Y'-direction side relative to the recess 210.

The converters 300 may be optical-electrical converters. The optical-electrical converters are light-receiving elements (photodetectors), such as photodiodes, configured to convert optical signals from the optical fibers 110 into electrical signals and output the electrical signals to the corresponding electrodes 230. The converters 300 may be electrical-optical converters. The electrical-optical converters are light-emitting elements, such as semiconductor lasers or light-emitting diodes, configured to convert electrical signals from the electrodes 230 into optical signals and emit the optical signals to the corresponding optical fibers 110. The converters 300 may be any combination of optical-electrical converters and electrical-optical converters.

The optical module M may further include a mirror 400. The mirror 400 may preferably extend at least on the wall 221 of the groove 220, as in the embodiment of Fig. 1A to Fig. 2B, or at least on the Y'-direction side wall of the recess 210. More specifically, the mirror 400 may be a metallic film on the wall 221 of the groove 220 or the Y'-direction side wall of the recess 210, or a mirror-finished surface formed by polishing the wall 221 of the groove 220 or the Y'-direction side wall of the recess 210. The mirror 400 is inclined or curved such that the first end portions 111 of the optical fibers 110 are optically connected to the respective converters 300 via the mirror 400. In other words, the mirror 400 has an inclined face or an concave face to reflect optical signals emitted from the optical paths of the first end portions 111 of the optical fibers 110 onto the converters 300, and/or to reflect the optical signals emitted from the converters 300 onto the optical paths of the first end portions 111 of the optical fibers 110. In this case, the inclined face or the concave face may respectively be the wall 221 or the Y'-direction side wall of the recess 210 on which the mirror 400 is provided. In the embodiment of Fig. 1A to Fig. 2B, the mirror 400 has a face inclined at 45 degrees with respect to the bottom of the recess 210. For convenience of description, Fig. 1B indicates a bi-directional arrow to show directions of optical signals reflected by the mirror 400.

The mirror 400 may also extend on the Y-direction side walls 222 and/or on an end portion the Y'-direction side of the bottom of the recess 210. For example, the mirror 400 may extend in one of the following areas 1) or 2): 1) the wall 221 of the groove 220, and at least one of the Y-direction side walls 222 and the Y'-direction side end portion of the bottom of the recess 210; or 2) the Y'-direction side wall of the recess 210, and at least one of the Y-direction side walls 222 and the Y'-direction side end portion of the bottom of the recess 210.

If a metal deposition process is adopted to form the mirror 400 as a metallic film (evaporated metallic film) only on the wall 221 of the groove 220 or the Y'-direction side wall of the recess 210, the mask for deposition should have a relatively small opening. This results in a relatively small area allocated to the mirror 400 on the wall 221 of the groove 220 or the Y'-direction side wall of the recess 210. If the mirror 400 is a metallic film formed on the above area 1) or 2) by the metal deposition process, the mask for deposition should have a relatively large opening. This is advantageous in allocating a relatively large area to the mirror 400 on the wall 221 of the groove 220 or the Y'-direction side wall of the recess 210.

If the mirror 400 and the groove 220 are omitted, the converters 300 may be arranged in the base 200, in parallel with each other along the X-X' direction, such as to be optically connected to the corresponding optical paths of the first end portions 111 of the optical fibers 110 fixedly positioned in the recess 210. In this case, the electrodes 230 to be connected to the respective converters 300 may preferably be provided in the base 200.

The connection structure S may further include a module board 500. The optical module M may preferably be mounted on the module board 500. More specifically, the base 200 of the optical module M may preferably be fixed onto the module board 500 by adhesion means, such as silver paste or electrically conductive adhesive, or by fixation means, such as screws or pins. In these cases, the electrodes 230 on the base 200 may be connected to conductive lines of the module board 500 via through-hole electrodes (not shown) in the base 200, or may be connected to conductive lines of the module board 500 via connection means (not shown), such as bonding wires or pins.

The connection structure S may further include a plurality of conversion circuits (not shown). The conversion circuits are optical-electrical conversion circuits and/or electrical-optical conversion circuits. The conversion circuits may preferably be provided on or in the module board 500, on the first face 201 of the base 200, or in the base 200.

The optical-electrical conversion circuits, if provided, are connected to the optical-electrical converters via the electrodes 230 (and the aforementioned through-hole electrodes or connection means). The optical-electrical conversion circuits serve to process electric signals converted from optical signals by the optical-electrical converters. The electrical-optical conversion circuits, if provided, are connected to the electrical-optical converters via the electrodes 230 (and the aforementioned through-hole electrodes or connection means). The electrical-optical conversion circuits serve to convert incoming electric signals to signals of a type that is convertible into optical signals and output the converted signals to the electrical-optical converters so as to make the electrical-optical converters emit optical signals.

The optical-electrical conversion circuits and/or electrical-optical conversion circuits may be omitted. If omitted, the optical-electrical conversion circuits and/or electrical-optical conversion circuits may preferably provided on e.g. a circuit board (not shown) other than the module board 500 and connected to the module board 500 or the converters 300 via known connection means, such as cables or pins.

The optical fibers 110 of the optical fiber array 100 each include a second end portion (not shown) on the opposite side to the first end portion 111. The connection structure S may further include a second optical module to be connected to the second end portions of the optical fibers 110. The second optical module may have the same configuration, except for following differences, as that of the first optical module M. In cases where the first end portions 111 of the optical fibers 110 are optically connected to optical-electrical converters, the second end portions of the optical fibers 110, as coated with the plastic part 120, are optically connected to electrical-optical converters (a plurality of second converters). In cases where the first end portions 111 of the optical fibers 110 are optically connected to electrical-optical converters, the second end portions of the optical fibers 110, as coated with the plastic part 120, are optically connected to optical-electrical converters (a plurality of second converters). As with the first converters 300, the second converters of the second optical module may be electrical-optical converters, optical-electrical converters, or any combination of electrical-optical converters and optical-electrical converters.

The second optical module may have a different configuration from that the first optical module M. For example, the second optical module may preferably include a plurality of second converters to be optically connected to the second end portions of the optical fibers 110, with the plastic part 120 around the second end portions removed so as to separate the second end portions. The second converters are electrical-optical converters, optical-electrical converters, or any combination of electrical-optical converters and optical-electrical converters.

In the connection structure S illustrated in Fig. 1A to Fig. 2B, the optical fiber array 100 may be connected to the optical module M in the following manner. First, the first end portion of the optical fiber array 100 are inserted from the Y-direction side into the recess 210 of the base 200 of the optical module M. In other words, the first end portions 111 of the optical fibers 110 of the optical fiber array 100, as coated with the plastic part 120, are inserted from the Y-direction side into the recess 210 of the base 200 of the optical module M. Upon insertion, the first end portions 111 of the optical fibers 110 (that is, the first end portion of the optical fiber array 100) coated with the plastic part 120 are fixedly positioned in the recess 210. Also, the optical paths of the first end portions 111 of the optical fibers 110 are optically connected to the corresponding converters 300 via the mirror 400.

The connection structure described above has at least the following technical features. First, the plurality of optical fibers 110 can be readily connected to the corresponding converters 300 of the optical module M. Particularly, optical connection between the plurality of first end portions 111 of the optical fibers 110 and the plurality of converters 300 can be made at once simply by fixedly positioning the first end portions 111 of the optical fibers 110, as coated with the plastic part 120, to the recess 210 of the base 200.

Second, if the optical module M includes the mirror 400, the converters 300 can be positioned with high accuracy on the base 200 of the optical module M. This is because the base 200 is provided with the recess 210 for fixedly positioning the first end portions 111 of the optical fibers 110, the electrodes 230 to which the converters 300 are mounted, and the mirror 400 for optically connecting the optical fibers 110 to the converters 300. For this reason, simply by mounting the converters 300 to the electrodes 230 on the first face 201 of the base 200 such as to face the mirror 400 on the base 200, the converters 300 will be fixedly positioned with accuracy relative to the first end portions 111 of the optical fibers 110 fixedly positioned in the recess 210.

Third, if the base 200 of the optical module M is a Si substrate or an SOI substrate, the recess 210 and the groove 220 of the base 200 of the optical module M can be readily formed with accuracy. As described above, the recess 210 can be readily formed with accuracy in the base 200 by resist application and etching. The groove 220 can be readily formed with accuracy in the base 200 by a dicing process using a blade. The walls 221, 222 of the groove 220 can also be readily formed with accuracy in the base 200 at a desired inclination angle by the dicing process.

The above-mentioned connection structure is not limited to the above-described embodiment, and may be modified in any manner within the scope of the claims.

It should be appreciated that the connection structure of the above embodiments and variants thereof are described above by way of examples only. The materials, shapes, dimensions, numbers, arrangements, and other configurations of the constituents of the connection structure may be modified in any manner if they can perform similar functions. The configurations of the embodiment and the variants described above may be combined in any possible manner. The first direction of the invention may be any direction in which the first end portion of the optical fiber can be removably inserted into the recess of the optical module. The second direction of the invention may be any direction orthogonal to the first direction and in which the optical fibers are arranged. The third direction of the invention may be any direction orthogonal to the first and second directions.

### Reference Signs List

- S:: Connection structure
100: Optical fiber array
110: Optical fiber
111: First end portion
120: Plastic part
M: Optical module
200: Base
201: First face
210: Recess
220: Groove
221: Wall
222: Wall
230: Electrode
300: Converter
400: Mirror
500: Module board

## Claims

1. A connection structure (S) of an optical fiber array and an optical module comprising:
an optical module (M), the optical module comprising:
a base (200) having a first face (201) with a recess (210), the recess extending in a first direction (Y-Y') and a second direction (X-X') orthogonal to the first direction (Y-Y'), the recess opening to at least one side (Y) in the first direction; and
a plurality of converters (300) each being an optical-electrical converter or an electrical-optical converter, the plurality of converters being arranged at the base (200) in a row extending along the second direction (X-X'); and
an optical fiber array (100), the optical fiber array comprising:
a plastic part (120); and
a plurality of optical fibers (110) each having a first end portion (111) extending in the first direction (Y-Y'), the first end portions (111) of the optical fibers being arranged side by side along the second direction (X-X') and coated with the plastic part (120), the first end portions (111) as coated with the plastic part (120) being fixedly positioned in the recess (210) of the base (200) and optically connected to respective ones of the converters (300).

2. The connection structure (S) according to claim 1, wherein
the recess (210) also opens to one side (Z') in a third direction (Z-Z'), the third direction being orthogonal to the first (Y-Y') and second (X-X') directions,
the first face (201) of the base (200) is provided with a groove (220) on the other side (Y') in the first direction relative to the recess (210), the groove (220) extending in the second direction (X-X') such as to communicate with the recess (210) and open to the one side (Z) in the third direction, the groove (220) including a first wall (221) on the other side (Y') in the first direction,
the converters (300) are located on the one side (Z) in the third direction relative to the first wall (221), and
the optical module (M) further comprises a mirror (400) on the first wall (221) of the groove (220), the mirror (400) being inclined or curved such that the first end portions (111) of the optical fibers (110) are optically connected to their respective converters (300) via the mirror (400).

3. The connection structure (S) according to claim 2, wherein
the base (200) further comprises a bottom (210) of the recess, and
the mirror (400) extends on the first wall (221) and a portion on the other side (Y') in the first direction of the bottom of the recess (210).

4. The connection structure (S) according to claim 3, wherein
the groove (220) has a dimension in the second direction (X-X') larger than that of the recess (210),
the groove (220) further includes a pair of second walls (222) on the one side (Y) in the first direction,
the recess (210) is located between the second walls (222), and
the mirror (400) extends on the first wall (221), the second wall (222), and the portion on the other side (Y') in the first direction of the bottom of the recess (210).

5. The connection structure (S) according to claim 3 or 4, wherein the mirror (400) is an evaporated metallic film.

6. The connection structure (S) according to claim 1, wherein
the recess (210) opens also to one side (Z) in a third direction (Z-Z'), the third direction being orthogonal to the first (Y-Y') and second (X-X') directions, and the recess (210) further includes a wall on the other side (Y') in the first direction,
the converters (300) are located on the one side (Z) in the third direction relative to the wall, and
the optical module (M) further comprises a mirror (400) on the wall of the recess (210), the mirror (400) being inclined or curved such that the first end portions (111) of the optical fibers (110) are optically connected to their respective converters (300) via the mirror (400).

7. The connection structure (S) according to claim 6, wherein
the base (200) further comprises a bottom of the recess (210), and
the mirror (400) extends on the wall and a portion on the other side (Y') in the first direction of the bottom of the recess (210).

8. The connection structure (S) according to claim 7, wherein the mirror (400) is formed by depositing an evaporated metallic film.

9. The connection structure (S) according to any one of claims 2 to 8, wherein the base (200) is a Si or SOI substrate.

10. The connection structure (S) according to any one of claims 1 to 9, wherein the recess (210) has a dimension in the second direction (X-X') substantially same as or slightly larger than that of the optical fiber array (100).

11. A connection structure (S) for connecting an array of optical fibres (110) to an electrical circuit, the connection structure (S) comprising:
a base (200) having an upper surface (201) formed with a recess (210) defined by at least two opposing sidewalls and open at at least one end;
wherein the array of optical fibres (110) coated with a plastic part (120) may be received and fixedly positioned in the recess, with the optical fibres extending parallel to the sidewalls; and
the connection structure (S) further comprising a number of converters (300) at least equal to the number of optical fibres in the array, the converters (300) each being an optical-electrical converter or an electrical-optical converter, and the converters (300) being arranged in a row extending between the sidewalls at the end of the recess (210) opposite to the at least one open and, each optical fibre being optically connected to a respective one of the converters (300).

12. A connection structure (S) according to claim 11, wherein the recess has an end wall (221) provided with a reflective surface (400), and wherein each of the optical fibres (110) is optically connected to its respective converter (300) via the reflective surface (400).

13. A connection structure (S) according to claim 11, wherein each of the converters (300) is directly optically connected with a respective optical fibre (110).

14. A circuit board to which an optical fibre array is connected by means of the connection structure (S) according to any preceding claim.

15. An electronic device including a circuit board according to Claim 14.
